# EUROPÄISCHE PATENTSCHRIFT

(11) **EP 1 912 009 B1**
(45) Veröffentlichungstag und Bekanntmachung des Hinweises auf die Patenterteilung: **22.07.2009**
(21) Anmeldenummer: 07018887.5
(22) Anmeldetag: 26.09.2007
(51) Int. Cl.: F16L 33/20, F16L 37/088, F16L 37/12

(54) **Steckverbindungsanordnung für einen Schlauch und ein Rohr**
Connector assembly for a hose and pipe
Agencement de fiche de raccordement pour un tuyau souple et une conduite

(30) Priorität: 10.10.2006 DE 102006047882
(43) Veröffentlichungstag der Anmeldung: 16.04.2008
(73) Patentinhaber: NORMA Germany GmbH, 63477 Maintal (DE)
(72) Erfinder: Kertesz, Janos, 65719 Hofheim (DE); Wachter, Gerhard, 63654 Büdingen (DE)
(74) Vertreter: Knoblauch, Andreas

(56) Entgegenhaltungen:
- EP-A- 1 681 504
- DE-A1- 3 813 192
- DE-A1- 3 914 645
- DE-A1- 19 740 649
- DE-A1-9102004 019 79
- DE-C1- 3 815 172
- DE-C1- 19 818 562

## Beschreibung

Die Erfindung bezieht sich auf eine Steckverbindungsanordnung für einen Schlauch und ein Rohr, mit einer Hülse, die eine Außenwand und eine Innenwand, zwischen denen der Schlauch von dem einen Hülsenende her einführbar und einklemmbar ist, und am anderen Hülsenende eine erste Ringnut aufweist, mit einem offenen, federnden Verbindungsring, der sich über mehr als 180° erstreckt und sowohl mit der Hülse als auch dem Rohr verrastbar ist, und mit einem Dichtungsring zum Abdichten der Hülse gegen das Rohr im verbundenen Zustand von Rohr und Schlauch.

Eine Anordnung dieser Art ist aus der DE 197 40 649 B4 bekannt. Bei dieser Anordnung besteht der Verbindungsring aus Federstahldraht. Seine Schenkel werden tangential durch übereinander liegende Umfangsschlitze des außen auf die Hülse geschobenen Rohres und der Außenwand der Hülse geschoben. Die Ränder der äußeren Schlitze sind nach außen und die Ränder der inneren Schlitze nach außen und innen gedrückt. Dadurch ergeben sich Vorsprünge, die axial wirkende Widerlager für die Schenkel des Verbindungsrings bilden, um das Rohr und die Hülse zusammenzuhalten. Der Querschnitt des Federstahldrahtes ist rund. Die Schenkel des Verbindungsringes können daher bei hoher Axialbelastung der Verbindung radial nach außen bis über die nach außen gedrückten Ränder der Schlitze gedrückt werden, so daß sich die Verbindung löst. Da die Schenkel diese Ränder ferner punktuell belasten, besteht die Gefahr, daß sich die Ränder unter dem Druck der Schenkel verformen.

Um die Verbindung durch radiales Abziehen des Verbindungsrings zu lösen, ist der Verbindungsring (in der Praxis) in seinem Querteil zwischen den Schenkeln mit einer sperrig radial über den Umfang des Rohres vorstehenden Ausbauchung zum Erfassen mittels eines Werkzeugs oder mit der Hand versehen.

Der Dichtungsring sitzt in der ersten Ringnut zwischen dieser und dem Rohr. Durch die Schlitze des Rohres kann Schmutz eindringen, der bei mehrmaligem Lösen der Verbindung und erneutem Ankuppeln den Dichtungsring verschmutzen kann, so daß er nicht mehr dichtet.

Der Erfindung liegt die Aufgabe zugrunde, eine Steckverbindungsanordnung der eingangs geschilderten Art anzugeben, die einer höheren Axialbelastung standhält und einen kompakteren Aufbau hat.

Erfindungsgemäß ist diese Aufgabe dadurch gelöst, daß der Verbindungsring ein Blattfederring mit nach innen gerichteten Flanschen an seinen beiden Umfangsrändern ist, daß die Flansche des einen Umfangsrandes in die erste Ringnut und die Flansche des anderen Umfangsrandes hinter einer Halterippe am Rohr einrastbar sind, daß der Dichtungsring in einer durch die Innenwand der Hülse und die axial innere Wand der ersten Ringnut begrenzten zweiten Ringnut angeordnet ist und daß ein Endabschnitt des Rohres in die Hülse einführbar ist. Bei dieser Lösung entfällt eine sperrige Ausbauchung am Verbindungsring. Zum Lösen der Verbindung kann eine Spreizzange zwischen den Umfangsenden des Verbindungsrings angesetzt oder in Löchern in diesen Enden eingesetzt werden. Der Verbindungsring kann aus sehr biegesteifem Federstahl hergestellt werden, so daß sich seine Flansche auch bei hoher Axialbelastung der Verbindung nicht axial nach außen biegen und die Verbindung bestehen bleibt. Die Flansche können sich über einen großen Umfangsbereich der ersten Ringnut unter Axialbelastung der Verbindung abstützen, so daß keine punktuelle Belastung der axial äußeren Wand der ersten Ringnut mit entsprechend hoher Flächenpressung auftritt. Vorzugsweise liegen die Flansche großflächig an der axial äußeren Wand der ersten Ringnut an.

Durch die erfindungsgemäße Steckverbindungsanordnung kann kein Schmutz von außen an den Dichtungsring gelangen, da er innerhalb der Hülse liegt. Seine Dichtfähigkeit bleibt daher länger erhalten.

Ferner kann wenigstens die eine Hülsenwand Metallblech aufweisen, das radial in Richtung auf den Schlauch bleibend verformbar ist. Die Verformung kann nach Einführung des Schlauches in die Hülse ausgeführt werden, so daß der Schlauch fest in der Hülse eingeklemmt wird.

Vorzugsweise ist die erste Ringnut doppelwandig aus bleibend verformbarem Metallblech der Hülse geformt. Die durch die Flansche des Verbindungsrings bei axialer Belastung der Verbindung belastete Wand der ersten Ringnut erhält dadurch eine hohe Biegesteifigkeit, ohne sich bei hoher Axialbelastung zu verbiegen.

Ferner kann die Außenwand der Hülse wenigstens einen nach innen ragenden Vorsprung für den Eingriff in das Schlauchmaterial aufweisen. Dieser Vorsprung trägt zusätzlich zur Axialsicherung des Schlauches in der Hülse bei.

Hierbei kann die Außenwand der Hülse bleibend verformbares Metallblech aufweisen, das für jeden Vorsprung der Außenwand einen sich in Umfangsrichtung der Hülse erstreckenden Schlitz aufweist, dessen dem in die Hülse eingeführten Schlauchende abgekehrter Rand als Vorsprung der Außenwand nach innen gedrückt ist. Ein derart ausgebildeter Vorsprung dringt nach Art eines Widerhakens leicht und tiefer in das Schlauchmaterial ein, wenn die Verbindung axial belastet wird.

Vorzugsweise ist dafür gesorgt, daß die Innenwand der Hülse Kunststoff aufweist und mit der Außenwand der Hülse formschlüssig verbunden ist. Diese Ausbildung der Hülse vereinfacht die gewünschte Formgebung der Hülsenwände. So kann die Innenwand der Hülse außen tannenbaumartig gerippt sein, um den Halt des Schlauches in der Hülse zu erhöhen.

Darüber hinaus kann der Kunststoff der Innenwand der Hülse thermoplastisch sein und die Innenwand den Boden und die axial innere Wand der zweiten Ringnut bilden. Dies ermöglicht es, den Dichtungsring als Lippendichtung auszubilden, die ein Elastomer aufweist und in der zweiten Ringnut an dem Kunststoff der Innenwand der Hülse angespritzt ist. Bei dieser Ausbildung des Dichtungsrings und der Art seiner Befestigung in der zweiten Ringnut entfällt eine separate Montage des Dichtungsrings. Darüber hinaus hat der Dichtungsring eine hohe Dichtwirkung.

Alternativ kann die Außenwand der Hülse Kunststoff und die Innenwand der Hülse bleibend verformbares Metallblech aufweisen und mit der Außenwand formschlüssig verbunden sein.

Die Hülse und die erste Ringnut können einstückig aus bleibend verformbarem Metallblech ausgebildet sein. Die erste Ringnut ist dann doppelwandig und dadurch biegesteifer.

Die formschlüssige Verbindung der Hülsenwände kann eine verrastete Steckverbindung sein. Dies vereinfacht das Herstellen der Verbindung.

Die Erfindung und ihre Weiterbildungen werden nachstehend anhand der beiliegenden Zeichnungen bevorzugter Ausführungsbeispiele näher beschrieben. Darin stellen dar:
- Fig. 1: einen Axialschnitt durch ein erstes Ausführungsbeispiel einer erfindungsgemäßen Steckverbindungsanordnung zum Verbinden eines Rohres mit einem Schlauch,
- Fig. 2: eine perspektivische Ansicht eines Teils der Steckverbindungsanordnung nach Fig. 1 ohne das Rohr,
- Fig. 3: einen Axialschnitt durch ein zweites Ausführungsbeispiel einer erfindungsgemäßen Steckverbindungsanordnung, die gegenüber der Steckverbindungsanordnung nach Fig. 1 etwas abgewandelt ist,
- Fig. 4: eine perspektivische Anordnung der Steckverbindungsanordnung nach Fig. 3 ohne das Rohr,
- Fig. 5: einen vergrößerten Ausschnitt des Axialschnitts der Steckverbindungsanordnung nach Fig. 3 mit einer Lippendichtung anstelle des in Fig. 3 dargestellten O-Rings,
- Fig. 6: einen vergrößerten Ausschnitt eines Axialschnitts eines dritten Ausführungsbeispiels der erfindungsgemäßen Steckverbindungsanordnung, das gegenüber dem nach Fig. 1 abgewandelt ist, und
- Fig. 7: einen vergrößerten Ausschnitt eines Axialschnitts eines vierten Ausführungsbeispiels der erfindungsgemäßen Steckverbindungsanordnung, das gegenüber dem in Fig. 1 dargestellten abgewandelt ist.

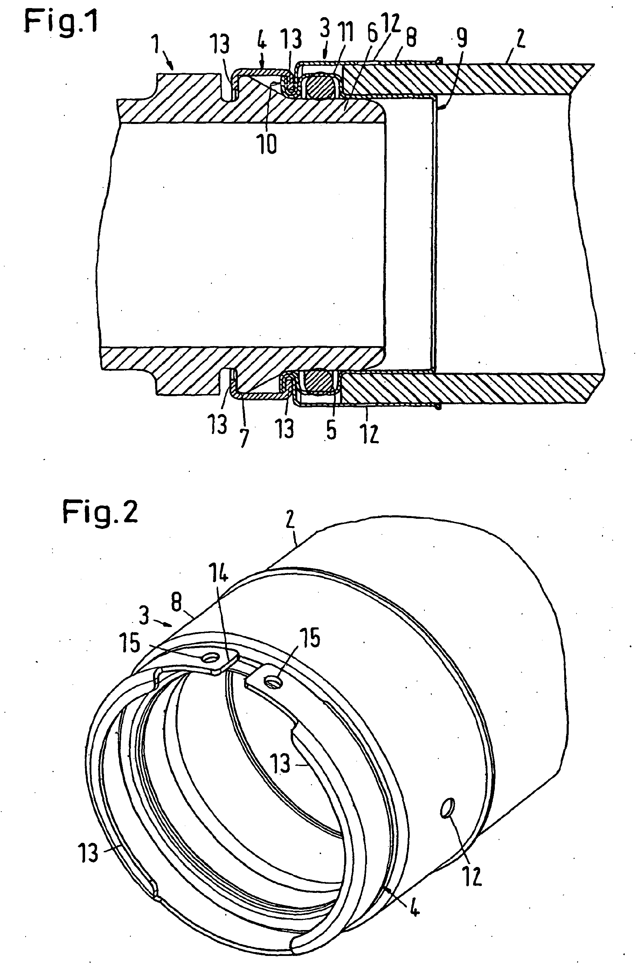

Das erste Ausführungsbeispiel einer erfindungsgemäßen Steckverbindungsanordnung nach den Fig. 1 und 2 besteht aus einem Rohr 1, bei dem es sich auch um einen Rohrstutzen handeln kann, einem Schlauch 2, einer Hülse 3, einem Verbindungsring 4 und einem Dichtungsring 5, hier einem O-Ring.

Das Rohr 1 weist thermoplastischen Kunststoff auf, z.B. PA, POM, PBT oder PBN, kann aber auch Metall aufweisen.

Der Schlauch 2 weist ebenfalls Kunststoff auf, z.B. ein Elastomer, kann aber auch Kautschuk aufweisen.

Die Hülse 3 besteht aus bleibend verformbarem Metallblech, vorzugsweise Aluminium oder Stahl.

Der Verbindungsring 4 besteht aus Federstahl.

Der Dichtungsring 5 besteht ebenfalls aus einem Elastomer oder Kautschuk.

Das Rohr 1 hat einen Endabschnitt 6 mit einer umlaufenden Halterippe 7, die eine Auflaufschräge aufweist und eine Ringnut begrenzt. Der Endabschnitt 6 wird beim Verbinden von Rohr 1 und Schlauch 2 in einen Endabschnitt der Hülse 3 eingeführt.

Die Hülse 3 ist einstückig mit einer Außenwand 8 und einer Innenwand 9 ausgebildet, die in einem schlauchseitigen Endabschnitt einen radialen Abstand aufweisen. Ein Endabschnitt des Schlauches 2 wird in die Hülse 3 zwischen Außenwand 8 und Innenwand 9 eingeführt und durch eine (nicht dargestellte) bleibende Verformung der Außenwand 8 und/oder der Innenwand 9 in der Hülse 3 festgeklemmt. Die Verformung kann aus wenigstens einer sich in Umfangsrichtung der Hülse 3 erstreckenden Sicke bestehen.

Der rohrseitige Endabschnitt der Hülse 3 bildet eine doppelwandige, entsprechend biegesteife, radial nach außen offene erste Ringnut 10 und eine an die erste Ringnut 10 angrenzende zweite Ringnut 11, die radial nach innen offen ist und den Dichtungsring 5 aufnimmt, so daß der Dichtungsring 5 die Hülse 3 auf ihrer Innenseite und den in die Hülse 3 eingeführten Endabschnitt 6 des Rohres 1 auf seiner Außenseite abdichtet.

Die Außenwand 8 der Hülse 3 hat ferner Öffnungen 12, um visuell prüfen zu können, ob der Schlauch 2 hinreichend weit in die Hülse 3 eingeführt worden ist, bevor er in der Hülse 3 festgeklemmt wird.

Der Verbindungsring 3 hat radial nach innen ragende Flansche 13 an jedem seiner axialen Ränder. Die schlauchseitigen Flansche 13 sind vor dem Einführen des Endabschnitts 6 des Rohres 1 in die Hülse 3 bereits in die Ringnut 10 eingerastet worden. Dabei wird der mit einem axialen Schlitz 14 (Fig. 2) versehene Verbindungsring 4 mittels einer in den Schlitz 14 oder in nahe den Rändern des Schlitzes 14 ausgebildete Löcher 15 eingesetzten Spreizzange aufgeweitet, axial über den stirnseitigen Rand der Ringnut 10 hinweggeführt und unter Entspannung des Verbindungsrings 4 in die Ringnut 10 eingerastet. Um den Verbindungsring 4 aufweiten zu können, befinden sich diametral gegenüber dem Schlitz 14 Lücken zwischen den Flanschen 13, wie Fig. 2 zeigt. Die schlauchseitigen Flansche 13 liegen über ihre gesamte Umfangslänge zumindest an der axial äußeren Innenseite der Ringnut 10 großflächig an, vorzugsweise jedoch an beiden Innenseiten der Ringnut 10, wie es in Fig. 1 dargestellt ist. Die großflächige Anlage ergibt eine geringe Flächenpressung bei einer Axialbelastung der Verbindung.

Nachdem der Verbindungsring 4 auf der Hülse 3 vormontiert worden ist, wird der Endabschnitt 6 des Rohres 1 in die Hülse 3 eingeführt, wobei die auf der Einführungsseite liegenden Flansche 13 über eine Auflaufschräge der Halterippe 7 unter Aufweitung des Verbindungsrings 4 hinweggleiten und in die Ringnut 8 einrasten. Da die schlauchseitigen Flansche 13 die Ringnut 10 weitgehend ausfüllen, kann sich der Verbindungsring 4 beim Ankuppeln des Rohres 1 praktisch nicht axial verschieben.

Alternativ können die Flansche 13 auch etwas zur axialen Mitte des Verbindungsrings 4 hin geneigt sein. Sie sind dann etwas biegesteifer gegen eine Axialbelastung der Verbindung und gleiten bei der Montage des Verbindungsrings 4 bzw. dem Ankuppeln des Rohres 1 leichter über den stirnseitigen Rand der Ringnut 10 bzw. die Halterippe 7 hinweg. Die dann nur noch linienförmige Berührung zwischen den radial inneren Rändern der Flansche 13 und den betreffenden Seiten der Ringnuten 8 bzw. 10, kann jedoch in vielen Relastungsfällen ausreichen, um eine Verformung dieser Seiten zu vermeiden.

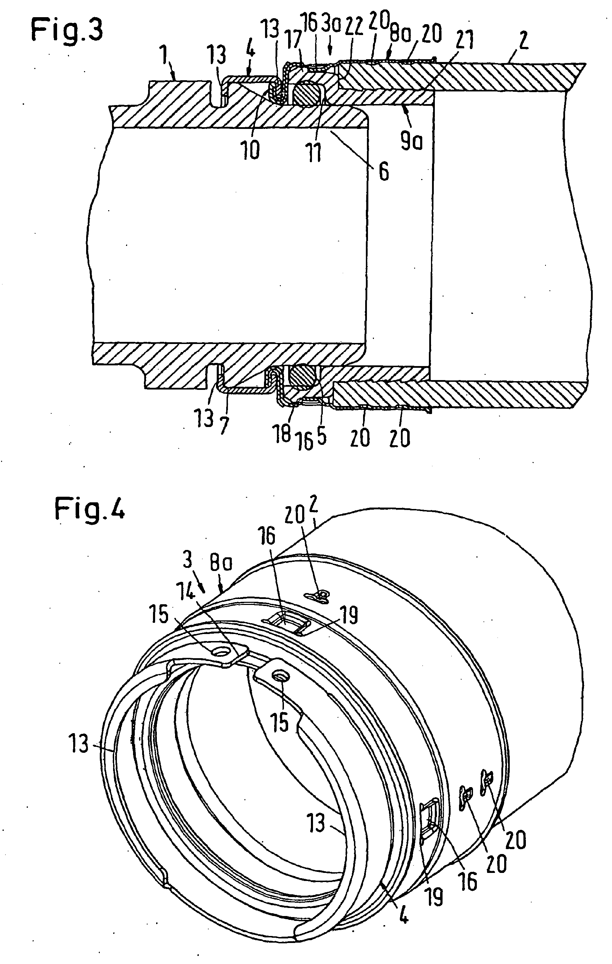

Das Ausführungsbeispiel nach den Fig. 3 und 4 ist, soweit gleiche Bezugszahlen für Einzelteile wie in den Fig. 1 und 2 verwendet werden, mit dem ersten Ausführungsbeispiel nach den Fig. 1 und 2 identisch. Die Bezugszahlen derjenigen Teile, die gegenüber denjenigen nach den Fig. 1 und 2 abgewandelt sind, sind dagegen mit dem Index "a" versehen.

Unterschiedlich gegenüber dem ersten Ausführungsbeispiel ist mithin nur die Hülse 3a. Ihre Außenwand 8a weist bleibend verformbares Metallblech auf und ist von der Innenwand 9a, die thermoplastischen Kunststoff aufweist, getrennt hergestellt und mit dieser formschlüssig verbunden. Die formschlüssige Verbindung ist eine verrastbare Steckverbindung. Sie besteht darin, daß die Außenwand 8a mit vier nach innen gedrückten Vorsprüngen 16 versehen ist, die auf einem Umkreis der Außenwand 8a gleichmäßig verteilt angeordnet sind, und daß die Innenwand 9a eine umlaufende Halterippe 17 aufweist, die beim Einführen des Schlauches 2 in die Hülse 3a hinter den Vorsprüngen 16 einrastet. Stirnseitig ist die Halterippe 17 mit einer Auflaufschräge versehen. Desgleichen sind die Vorsprünge 16 auf ihrer Rückseite mit einer Auflaufschräge versehen. Die Auflaufschrägen erleichtern das Zusammenstecken der Innenwand 9a und der Außenwand 8a, da sich die Vorsprünge 16 und die Halterippe 17 leichter aneinander vorbeibewegen lassen.

Die Vorsprünge 16 sind durch radiales Eindrücken des einen Randes 18 sich in Umfangsrichtung erstreckender kurzer Schlitze 19 (Fig. 4) ausgebildet.

Die Außenwand 8a hat weitere nach innen gedrückte Vorsprünge 20, die über den Umfang der Halterippe 3a gleichmäßig verteilt angeordnet und ebenso wie die Vorsprünge 16, jedoch etwas kleiner als die Vorsprünge 16 ausgebildet sind. Einige Vorsprünge sind hintereinander angeordnet. Ferner bildet die Außenwand 8a ebenso wie die Außenwand 8 des ersten Ausführungsbeispiels die doppelwandige Ringnut 10.

Die Innenwand 9a ist auf ihrer Außenseite tannenbaumartig gerippt, d.h. mit parallel zueinander umlaufenden Rippen 21 versehen, und begrenzt mit einem stufenartigen Vorsprung 22 die eine Seite und den Boden der zweiten Ringnut 11. Die andere Seite der Ringnut 11 wird durch den doppelwandigen Teil der ersten Ringnut 10 bzw. der Außenwand 8a begrenzt.

Beim Einführen des Schlauches 2 in die Hülse 3a zwischen die Außenwand 8a und die Innenwand 9a greifen die Vorsprünge 20 und die Rippen 21 in das Schlauchmaterial ein, so daß der Schlauch 2 fest in der Hülse 3a gehalten wird. Zusätzlich kann die Außenwand 8 mit radial nach innen gedrückten Verformungen, z.B. Sicken, versehen sein, so daß der Schlauch 2 noch fester in der Hülse 3a gehalten wird und die Verbindung einer noch höheren Axialbelastung standhält. Je nach Höhe der Axialbelastung der Verbindung kann auch eine geringere oder größere Anzahl von Vorsprüngen 16 und 20 vorgesehen sein. Bei geringer Axialbelastung könnte nur eine Rippe 21 und/oder nur ein Vorsprung 20 ausreichend sein, insbesondere wenn die Außenwand 8a nach innen verformt, z.B. mit Sicken versehen wird.

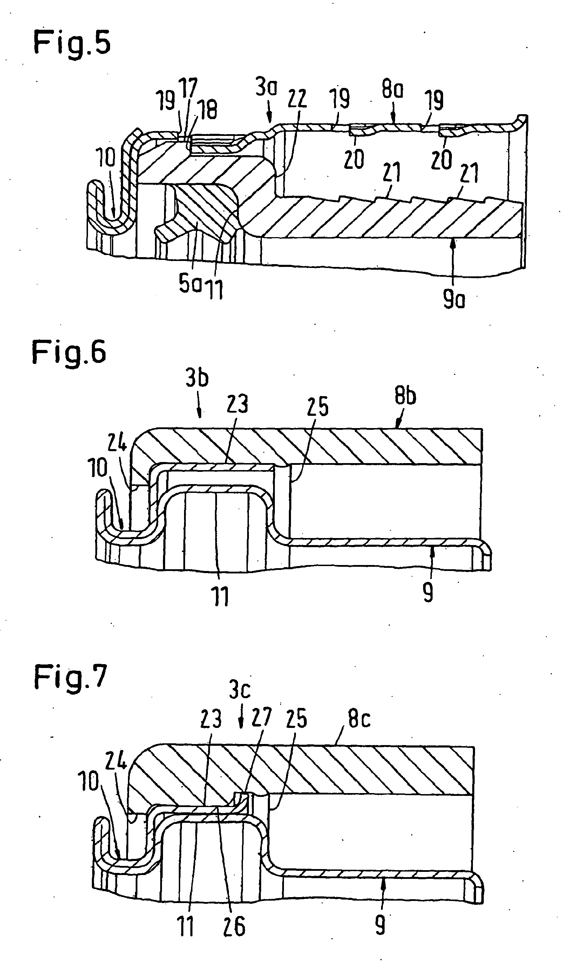

Das in Fig. 5 nur als vergrößerter Abschnitt dargestelltes Ausführungsbeispiel der erfindungsgemäßen Steckverbindungsanordnung unterscheidet sich von dem in den Fig. 3 und 4 dargestellten nur hinsichtlich des Dichtungsrings 5a, der als Lippendichtung aus elastischem Kunststoff in die Ringnut 11 eingespritzt wird, bevor die Innenwand 9a in die Außenwand 8a eingesteckt wird. Der Dichtungsring 5a hat eine bessere Dichtwirkung als der O-Ring 5 und braucht nicht separat montiert zu werden.

Das in Fig. 6 als vergrößerter Ausschnitt dargestellte Ausführungsbeispiel der erfindungsgemäßen Steckverbindungsanordnung unterscheidet sich von dem in den Fig. 1 und 2 dargestellten im wesentlichen nur darin, daß die Außenwand 8b der Hülse 3b Kunststoff aufweist und mit einem über die Ringnut 11 in einem Abstand von dieser zurückgebogenen Teil 23 zwischen zwei nach innen ragenden Vorsprüngen 24 und 25 der Außenwand 8b beim Zusammenstecken von Außenwand 8b und Innenwand 9 einrastbar ist, so daß sich eine formschlüssige Steckverbindung zwischen der Außenwand 8b und der Innenwand 9 ergibt. Um den Schlauch 2 zwischen der Außenwand 8b und der Innenwand festzuklemmen, wird nur die weiterhin bleibend verformbares Metallblech aufweisende Innenwand 9 verformt, z.B. ebenfalls mittels sich in Umfangsrichtung der Innenwand 9 erstreckender, radial nach außen in die Innenwand 9 gedrückter Sicken, die ins Schlauchmaterial eingreifen.

Das in Fig. 7 ebenfalls nur als vergrößerter Ausschnitt dargestellte Ausführungsbeispiel der erfindungsgemäßen Steckverbindungsanordnung unterscheidet sich von dem in Fig. 6 dargestellten nur darin, daß die Außenwand 8c innen zusätzlich eine Abstufung 26 aufweist und der Teil 23 der Innenwand 9 mit einem radial nach außen ragenden Flansch 27 versehen ist, der beim Zusammenstekken von Außenwand 8c und Innenwand 9 zwischen der Abstufung 26 und dem Vorsprung 25 einrastet. Der Teil 23 stützt sich am Boden der Ringnut 11 ab. Der Flansch 27 hält daher einer höheren Axialbelastung der Verbindung stand, ohne aus der Nut zwischen der Abstufung 26 und dem Vorsprung 25 auszurasten.

## Patentansprüche

1. Steckverbindungsanordnung für einen Schlauch (2) und ein Rohr (1), mit einer Hülse (3; 3a-3c), die eine Außenwand (8; 8a-8c) und eine Innenwand (9; 9a-9c), zwischen denen der Schlauch (2) von dem einen Hülsenende her einführbar und einklemmbar ist, und am anderen Hülsenende eine erste Ringnut (10) aufweist, mit einem offenen, federnden Verbindungsring (4), der sich über mehr als 180° erstreckt und sowohl mit der Hülse (3; 3a-3c) als auch dem Rohr (1) verrastbar ist, und mit einem Dichtungsring (5; 5a) zum Abdichten der Hülse (3; 3a-3c) gegen das Rohr (1) im verbundenen Zustand von Rohr (1) und Schlauch (2), **dadurch gekennzeichnet, daß** der Verbindungsring (4) ein Blattfederring mit nach innen gerichteten Flanschen (13) an seinen beiden Umfangsrändern ist, daß die Flansche (13) des einen Umfangsrandes in die erste Ringnut (10) und die Flansche (13) des anderen Umfangsrandes hinter einer Halterippe (7) am Rohr (1) einrastbar sind, daß der Dichtungsring (5; 5a) in einer durch die Innenwand (9; 9a) der Hülse (3; 3a-3c) und die axial innere Wand der ersten Ringnut (10) begrenzten zweiten Ringnut(11) angeordnet ist und daß ein Endabschnitt (6) des Rohres (1) in die Hülse (3; 3a-3c) einführbar ist.

2. Steckverbindungsanordnung nach Anspruch 1, **dadurch gekennzeichnet, daß** wenigstens die eine Hülsenwand (8; 8a; 9) Metallblech aufweist, das radial in Richtung auf den Schlauch (2) bleibend verformbar ist.

3. Steckverbindungsanordnung nach Anspruch 1 oder 2, **dadurch gekennzeichnet, daß** die erste Ringnut (10) doppelwandig aus bleibend verformbarem Metallblech der Hülse (3) geformt ist.

4. Steckverbindungsanordnung nach einem der Ansprüche 1 bis 3, **dadurch gekennzeichnet, daß** die Außenwand (8a) der Hülse (3a) wenigstens einen nach innen ragenden Vorsprung (20) für den Eingriff in das. Schlauchmaterial aufweist.

5. Steckverbindungsanordnung nach Anspruch 4, **dadurch gekennzeichnet, daß** die Außenwand (8a) der Hülse (3a) bleibend verformbares Metallblech aufweist, das für jeden Vorsprung (20) der Außenwand (8a) einen sich in Umfangsrichtung der Hülse (3a) erstrekkenden Schlitz (19) aufweist, dessen dem in die Hülse (3a) eingeführten Schlauchende abgekehrter Rand als Vorsprung der Außenwand (8a) nach innen gedrückt ist.

6. Steckverbindungsanordnung nach Anspruch 5, **dadurch gekennzeichnet, daß** die Innenwand (9a) der Hülse (3a) Kunststoff aufweist und mit der Außenwand (8a) der Hülse (3a) formschlüssig verbunden ist.

7. Steckverbindungsanordnung nach Anspruch 6, **dadurch gekennzeichnet, daß** die Innenwand (9a) der Hülse (3a) außen tannenbaumartig gerippt ist.

8. Steckverbindungsanordnung nach Anspruch 6 oder 7, **dadurch gekennzeichnet, daß** der Kunststoff der Innenwand (9a) der Hülse (3a) thermoplastisch ist und die Innenwand (9a) den Boden und die axial innere Wand der zweiten Ringnut (11) bildet.

9. Steckverbindüngsanordnung nach Anspruch 8, **dadurch gekennzeichnet, daß** der Dichtungsring (5a) eine Lippendichtung ist, die ein Elastomer aufweist und in der zweiten Ringnut (11) an dem Kunststoff der Innenwand (9a) der Hülse (3a) angespritzt ist.

10. Steckverbindungsanordnung nach einem der Ansprüche 1 bis 4, **dadurch gekennzeichnet, daß** die Außenwand (8b; 8c) der Hülse (3b; 3c) Kunststoff und die Innenwand (9) der Hülse (3b; 3c) bleibend verformbares Metallblech aufweist und mit der Außenwand (8b; 8c) formschlüssig verbunden ist.

11. Steckverbindungsanordnung nach Anspruch 2, **dadurch gekennzeichnet, daß** die Hülse (3) und die erste Ringnut (10) einstückig ausgebildet sind.

12. Steckverbindungsanordnung nach den Ansprüchen 6 und 10, **dadurch gekennzeichnet, daß** die formschlüssige Verbindung der Hülsenwände (8a; 8b; 8c, 9; 9a) eine verrastete Steckverbindung ist.

## Claims

1. Plug-type connector assembly for a hose (2) and a pipe (1), with a sleeve (3; 3a-3c) comprising an outer wall (8; 8a-8c) and an inner wall (9; 9a-9c), wherein the hose (2) is insertable from an end of and is clampable in the sleeve, and at another end thereof a first angular groove (10) with an open resilient connecting ring (4) which extends over more than 180° and is lockable to the sleeve (3; 3a-3c) as well as to the pipe (1), and with a sealing ring (5; 5a) for sealing the sleeve (3; 3a-3c) relative to the pipe (1) in a connected state of the pipe (1) and the hose (2), **characterized in that** the connecting ring (4) is a plate spring ring with inwardly directed flanges (13) at both circumferential edges thereof, that the flanges (13) of one circumferential edge are engageable in the first angular groove (10) and the flanges (13) of the other circumferential edge are engageable behind a holding rib (7) on the pipe (1), that the sealing ring (5; 5a) is located in a second angular groove (11) restricted by the inner wall (9; 9a) of the sleeves (3; 3a-3c) and the axially inner wall of the first angular groove (10), and that an end portion 6 of the pipe (1) is insertable into the sleeve (3; 3a-3c).

2. Plug-type connector assembly according to claim 1, **characterized in that** at least the one sleeve wall (8; 8a; 9) comprises sheet metal which is radially permanently deformable in a direction towards the hose (2).

3. Plug-type connector assembly according to claim 1 or 2, **characterized in that** the first angular groove (10) is formed double-walled by permanently deformable sheet metal of the sleeve (3).

4. Plug-type connector assembly according to one of the claims 1 to 3, **characterized in that** the outer wall (8a) of the sleeve (3a) comprises at least one inwardly protruding protrusion (20) for engagement in the hose material.

5. Plug-type connector assembly according to claim 4, **characterized in that** the outer wall (8a) of the sleeve (3a) comprises permanently deformable sheet metal comprising for each protrusion (20) of the outer wall (8a) a slot (19) extending in the circumferential direction of the sleeve (3a), wherein an edge of the slot (19) facing away from the hose end inserted into the sleeve (3a) is pressed inwardly as a protrusion of the outer wall (8a).

6. Plug-type connector assembly according to claim 5, **characterized in that** the inner wall (9a) of the sleeve (3a) comprises synthetic material and is in a positively engaging manner connected to the outer wall (8a) of the sleeve (3a).

7. Plug-type connector assembly according to claim 6, **characterized in that** the inner wall (9a) of the sleeve (3a) is ribbed on the outside in a fir tree manner.

8. Plug-type connector assembly according to claim 6 or 7, **characterized in that** the synthetic material of the inner wall (9a) of the sleeve (3a) is thermoplastic and the inner wall (9a) forms a bottom and the axially inner wall of the second angular groove (11).

9. Plug-type connector assembly according to claim 8, **characterized in that** the sealing ring (5a) is a lip seal which comprises an elastomer and is injection molded in the second angular groove (11) to the synthetic material of the inner wall (9a) of the sleeve (3a).

10. Plug-type connector assembly according to one of the claims 1 to 4, **characterized in that** the outer wall (8b; 8c) of the sleeve (3b; 3c) comprises synthetic material and the inner wall (9) of the sleeve (3b; 3c) comprises permanently deformable sheet metal and is connected in a positively engaging manner with the outer wall (8b; 8c).

11. Plug-type connector assembly according to claim 2, **characterized in that** the sleeve (3) and the first angular groove (10) are integrally formed as one piece.

12. Plug-type connector assembly according to the claims 6 and 10, **characterized in that** the positively engaging connection between the housing walls (8a; 8b; 8c, 9; 9a) is a locked plug-type connection.

## Revendications

1. Agencement de raccordement enfichable pour un tuyau souple (2) et un tube (1), comprenant un manchon (3 ; 3a-3c), qui comporte une paroi extérieure (8 ; 8a-8c) et une paroi intérieure (9 ; 9a-9c) entre lesquelles le tuyau souple (2) peut être introduit depuis une des extrémités du manchon, et est susceptible d'être coincé, et qui présente à l'autre extrémité du manchon une première gorge annulaire (10), comprenant une bague de raccordement ouverte (4) à effet élastique, qui s'étend sur plus de 180° et est susceptible d'être enclenchée aussi bien avec le manchon (3 ; 3a-3c) qu'avec le tube (1), et comprenant une bague d'étanchéité (5 ; 5a) pour étancher le manchon (3 ; 3a-3c) par rapport au tube (1) dans l'état raccordé du tube (1) et du tuyau (2), **caractérisé en ce que** la bague de raccordement (4) est une bague en forme de lame élastique avec des brides (13) dirigées vers l'intérieur au niveau de ses deux bordures périphériques, **en ce que** les brides (13) de l'une des bordures périphériques sont susceptibles de s'enclencher dans la première gorge annulaire (10) et les brides (13) de l'autre bordure périphérique sont susceptibles de s'enclencher derrière une nervure de maintien (7) sur le tube (1), **en ce que** la bague d'étanchéité (5 ; 5a) est agencée dans une deuxième gorge annulaire (11) limitée par la paroi intérieure (9 ; 9a) du manchon (3 ; 3a-3c) et la paroi intérieure axiale de la première gorge annulaire (10), et **en ce qu'**un tronçon terminal (6) du tube (1) peut être introduit dans le manchon (3, 3a-3c).

2. Agencement de raccordement enfichable selon la revendication 1, **caractérisé en ce que** l'une au moins des parois (8 ; 8a ; 9) du manchon comporte une tôle métallique qui est déformable de façon permanente radialement en direction du tuyau (2).

3. Agencement de raccordement enfichable selon la revendication 1 ou 2, **caractérisé en ce que** la première gorge annulaire (10) est conformée à double paroi à partir de la tôle métallique déformable de façon permanente du manchon (3).

4. Agencement de raccordement enfichable selon l'une des revendications 1 à 3, **caractérisé en ce que** la paroi extérieure (8a) du manchon (3a) comprend au moins une saillie (20) dépassant vers l'intérieur pour l'engagement dans le matériau du tuyau.

5. Agencement de raccordement enfichable selon la revendication 4, **caractérisé en ce que** la paroi extérieure (8a) du manchon (3a) comprend une tôle métallique déformable de façon permanente, qui présente pour chaque saillie (20) de la paroi extérieure (8a) une fente (19) qui s'étend selon la direction périphérique du manchon (3a) et dont la bordure détournée de l'extrémité du tuyau introduite dans le manchon (3a) est enfoncée vers l'intérieur à titre de saillie de la paroi extérieure (8a).

6. Agencement de raccordement enfichable selon la revendication 5, **caractérisé en ce que** la paroi intérieure (9a) du manchon (3a) comprend une matière plastique et est reliée par coopération de formes à la paroi extérieure (8a) du manchon (3a).

7. Agencement de raccordement enfichable selon la revendication 6, **caractérisé en ce que** la paroi intérieure (9a) du manchon (3a) est nervuré à l'extérieur avec un profil analogue à des dents de scie.

8. Agencement de raccordement enfichable selon la revendication 6 ou 7, **caractérisé en ce que** la matière plastique de la paroi intérieure (9a) du manchon (3a) est thermoplastique et la paroi intérieure (9a) forme le fond et la paroi axialement intérieure de la deuxième gorge annulaire (11).

9. Agencement de raccordement enfichable selon la revendication 8, **caractérisé en ce que** la bague d'étanchéité (5a) est un joint à lèvres, qui comprend un élastomère et qui est réalisé par enrobage dans la deuxième gorge annulaire (11) sur la matière plastique de la paroi intérieure (9a) du manchon (3a).

10. Agencement de raccordement enfichable selon l'une des revendications 1 à 4, **caractérisé en ce que** la paroi extérieure (8b ; 8c) du manchon (3b ; 3c) comporte une matière plastique et la paroi intérieure (9) du manchon (3b ; 3c) comporte une tôle métallique déformable de façon permanente, et est raccordée par coopération de formes à la paroi extérieure (8b ; 8c).

11. Agencement de raccordement enfichable selon la revendication 2, **caractérisé en ce que** le manchon (3) et la première gorge annulaire (10) sont réalisés d'une seule pièce.

12. Agencement de raccordement enfichable selon les revendications 6 et 10, **caractérisé en ce que** le raccordement à coopération de formes des parois du manchon (8a ; 8b ; 8c, 9 ; 9a) est un raccordement enfichable à enclenchement.
